**Europäisches Patentamt**

**European Patent Office**

**Office européen des brevets**

(11) Veröffentlichungsnummer: **0 061 047**
**B1**

(12) **EUROPÄISCHE PATENTSCHRIFT**

(45) Veröffentlichungstag der Patentschrift:
23.01.85

(21) Anmeldenummer: **82101784.5**

(22) Anmeldetag: **06.03.82**

(51) Int. Cl.⁴: **B 66 C 23/66,** A 01 D 87/00,
E 02 F 3/47, B 66 C 3/20

(54) Verfahren und Vorrichtung zur Einlagerung von landwirtschaftlichem Gut, wie Rauhfutter und Siliergut bis unter die Dachhaut eines landwirtschaftlichen Gebäudes.

(30) Priorität: **25.03.81 DE 3111710**

(43) Veröffentlichungstag der Anmeldung:
**29.09.82 Patentblatt 82/39**

(45) Bekanntmachung des Hinweises auf die Patenterteilung:
**23.01.85 Patentblatt 85/4**

(84) Benannte Vertragsstaaten:
**AT CH DE FR LI**

(56) Entgegenhaltungen:
**DE - C - 859 211**
**FR - A - 2 485 500**
**GB - A - 379 190**
**GB - A - 708 791**
**US - A - 3 669 287**

(73) Patentinhaber: **Franz X. Kibler Maschinenfabrik,**
**Steinstrasse 41, D-7967 Bad Waldsee (DE)**

(72) Erfinder: **Kibler, Kurt, Steinstrasse 37, D-7967 Bad**
**Waldsee (DE)**

(74) Vertreter: **Braito, Herbert, Dipl.-Ing.,**
**Postfach 1140 Martin-Luther-Strasse 1,**
**D-7950 Biberach/Riss 1 (DE)**

## Beschreibung

Die Erfindung betrifft ein Verfahren zur Einlagerung von landwirtschaftlichem Gut wie Rauhfutter und Siliergut bis unter die Dachhaut eines Landwirtschaftlichen Gebäudes unter Verwendung eines Greifer-Auslegerkrans mit am Auslegerende mittels eines flexiblen Tragmittels über größere Hubhöhe heb- und senkbar aufgehängtem Greifer.

Zur Ausübung dieses Verfahrens werden meist Greifer-Auslegerkräne für Futterbergehallen, Speichergebäude u. dgl. eingesetzt. Sie sind dort in der Regel im Dachraum angebracht, mitunter stationär, meist jedoch an Führungsschienen längsverfahrbar. Dabei können Drehlaufkatzen mit starrem Ausleger, Wippausleger, längsverfahrbarem oder teleskopisch ausfahrbarem Ausleger zum Einsatz kommen.

Bei den meisten Auslegerkranen dieser Art ist der Greifer über ein oder mehrere Tragmittel wie Drahtseil oder Kette am freien Auslegerende angehängt und kann durch eine Winde lotrecht bewegt werden. Der Greifer benötigt jedoch mit seiner Aufhängung eine bestimmte Bauhöhe, man kann daher nicht bis dicht unter den Ausleger, sondern nur bis unter den Greifer einlagern. Der verbleibende obere Raum läßt sich nur mit zusätzlichen Maschinen, mit einem Gebläse oder in Handarbeit befüllen.

Die meisten bestehenden Futterbergehallen sind zu klein, neue Futterbergehallen will man mit Rücksicht auf umgebende Landschaft und Baukosten möglichst niedrig bauen. Deshalb wird häufig die Forderung nach einem landwirtschaftlichen Kran erhoben, der es ohne zusätzliche Einrichtungen und ohne Handarbeit gestattet, Rauhfutter bis an die untere Dachhaut einzulagern.

Aus diesem Grunde werden gelegentlich Krananlagen gebaut, deren Greifer biegefest am Ausleger angebaut sind. Wenn die Längsachse des Auslegers lotrecht ist, hat der Greifer dieselbe Position, wie wenn er am Seil hängt. In dieser Position kann beispielsweise von der Tenne Rauhfutter aufgenommen werden. Der Wippausleger wird dann hochgekippt und der Greifer behält seine Anordnung zum Ausleger. So ist es möglich, unter Einschaltung eines oder mehrerer Fahrantriebe, das Rauhfutter bis an die Dachhaut zu schieben. Nachteilig ist bei dieser Anordnung, daß die Arbeitshöhe der Krananlage durch die Auslegerlänge begrenzt ist. Immerhin sind geforderte Hubhöhen von 14 m in der Landwirtschaft keine Seltenheit.

Im Prinzip ist es natürlich möglich, einen normalerweise am Tragmittel aufgehängten Greifer nach Bedarf fest mit dem Ausleger zu verbinden. Im ersten Rüstzustand erreicht man dann die angestrebte große Hubhöhe, und mit dem biegefesten Anschluß des Greifers am Ausleger läßt sich dichter unter die Dachhaut einlagern. Dabei ist jedoch das wiederholte Umrüsten zeit- und kostenaufwendig.

Die Erfindung geht aus von dem eingangs definierten Verfahren und verfolgt die Aufgabe, dieses Verfahren so zu vervollkommnen, daß das Gut mit den eingesetzten Auslegerkran ohne Umbauvorgänge von der Aufnahmestelle bis hoch unter die Dachhaut angehoben und abgelagert werden kann.

Zur Lösung dieser Aufgabe wird erfindungsgemäß der Greifer nach Aufnahme dieses Gutes mit diesem durch das Tragmittel bis zum Auslegerende angehoben, daraufhin bis wenigstens in eine angenäherte Verlängerung des Auslegers hochgeschwenkt und mit diesem gekuppelt, und dann wird das Gut mittels des nach Art eines Stielgreifers am Ausleger angekuppelten Greifers in die Einlageposition gebracht und dort abgesetzt.

Die resultierende Arbeitsgeschwindigkeit ist dabei umso größer, je schneller die Umwandlung von Hängegreifer in Stielgreifer erfolgt. In der Regel braucht man jedenfalls den am Tragmittel hängenden Greifer nur in seine Endstellung am Ausleger einzufahren, wodurch die Abstützung und dann die Kupplung von Greifer und Ausleger selbsttätig bewirkt wird. Der jetzt unmittelbar durch den Ausleger gehaltene Greifer kann auch dann besser geführt werden, wenn er seine Queranordnung zum Ausleger beibehält. Man kann mit geringerer Verlusthöhe arbeiten und bis dicht an die vor allem bei älteren Gebäuden recht unterschiedlich geneigte Dachhaut einfüllen. Bemerkenswerte Umrüstvorgänge kommen dabei ebenso in Fortfall wie oftmals notwendige Zwischenlagerungen außerhalb des eigentlichen Speichers.

Die Erfindung betrifft ferner eine insbesondere zum Ausüben des vorgeschilderten Verfahrens bestimmte Vorrichtung zur Einlagerung von landwirtschaftlichem Gut wie Rauhfutter und Siliergut bis unter die Dachhaut eines landwirtschaftlichen Gebäudes, mit einem Auslegerkran mit einem am Auslegerende geführten, an ein Hubwerk angeschlossenen flexiblen Tragmittel wie ein Hubseil, das einen Greifer über eine größere Hubhöhe heb- und senkbar freipendelnd trägt, welche Vorrichtung erfindungsgemäß gekennzeichnet ist durch an Greifer und Auslegerende vorgesehene und einander zugeordnete Schwenkmittel, die beim Einfahren des Greifers in dessen Hub-Endstellung am Auslegerende zum Hochschwenken des Greifers in der vertikalen Längsachse des Auslegers zum Eingriff kommen, und Eingriffsmittel zum selbsttätigen Führen in eine wenigstens angenäherte Verlängerung des Auslegers, sowie zum biegefesten Anschließen des Greifers am Ausleger bis zum Ablagern des Ladegutes aus erhöhter Stielgreiferstellung.

Der zunächst hängend hochgezogene Greifer kann auf diese Weise mit dem erfaßten Gut automatisch in die Stielgreiferstellung hochgeschwenkt werden. Selbst wenn noch ein kleiner Rest-Neigungswinkel verbleibt, so läßt sich das Gut jetzt wesentlich weiter ausladend halten als mit einem Hängegreifer. Bei sonst gleicher Stellung des Auslegers kann das Gut weiter zur Seite und höher als sonst eingepackt werden.

Bei Stiel-Baggern, wie sie vornehmlich bei Ausschachtarbeiten auf Flurfahrzeugen, insbesondere Raupenfahrzeugen, eingesetzt werden, ist es durch die US-PS 3 669 287 bekannt, den Greifer stirnseitig oder seitlich an das Ende des schwenkbar und längsverfahrbar am Ausleger angebrachten Baggerstiels anzuschließen, wobei zum Umsetzen aus der einen in die andere Anschlußstellung und auch zum Halten in Zwischenstellungen der Greifer an einer kurzen Laschenkette aufgehängt ist, die sich zur Änderung der Anschlußstellung durch einen Strömungsmittelzylinder lockern und zum Festlegen des Greifers in der jeweiligen Anschlußstellung anziehen läßt. Um dabei den mit einem Abstand von wenigen Zentimetern unter dem Baggerstielende hängenden Greifer an das Stirnende anzuschließen, muß der Baggerstiel erst so weit abgesenkt werden, daß sich der Greifer über die untere Kante des Stielendes beim Anziehen der Kette hochheben läßt. Auf diese Weise läßt sich zwar eine weitgehend formschlüssige Abstützung zwischen Greifer und Baggerstiel erzielen, aber diese Vorrichtung ist ausschließlich für nach unten wippbare Ausleger geeignet. Es ist arbeitstechnisch nicht möglich, in landwirtschaftlichen Gebäuden bei einem Hubvorgang zunächst den Ausleger in eine Zwischen-Umsetzstellung zu bringen, dann den Greifer umzusetzen und erst anschließend Ausleger und Greifer in die jeweils für Lastaufnahme und -abgabe notwendige Position zu bringen.

Auch bei Hakenkranen sind verschiedene Vorschläge bekannt, den Träger des Hakens beim Anfahren am Auslegerende hochzuschwenken. So zeigt die DE-A-859 211 die am Auslegerende eines Rüstkraftwagens angebrachte Kranflansche, wobei das Endtrum des Hubseiles über einen Fanghebel geführt ist, der zentrisch zur Festrolle am Ausleger gelagert ist. Dabei fährt die Unterflasche in eine Kupplungsaussparung des Fanghebels ein und schwenkt mit diesem so hoch, daß die Kranflasche annähernd bis in die Verlängerung des Kranauslegers gelangt und so bei der Fahrt auf dem Wagenaufbau abgelegt werden kann.

Auch nach der GB-A 379 190 läuft das zum Kranhaken führende Zugmittel durch einen Führungsteil, der dort am Auslegerende befestigt ist. Wenn der Träger des Kranhakens an das untere Ende dieses Führungsteiles stößt, so wird der Ausleger an den Kranmast hochgeschwenkt. Das erfolgt jedoch offensichtlich ebenso ohne Last wie bei der zuvor geschilderten Ausführung. Das Lastaufnahmemittel wird nicht unmittelbar aufgeschwenkt, und der Haken hängt immer herab. Die Ausladung kann auf diese Weise nicht vergrößert werden, ganz davon, abgesehen, daß diese Kranart keinen Bezug zum Greiferbetrieb hat.

Nach der nicht vorveröffentlichten FR-A 2 485 500 kommen beim Einfahren der Unterflasche deren seitliche Lagerteile an einer gemeinsamen Anschlagfläche der entsprechenden Teile der Oberflasche zur Anlage. Diese Teile sind dabei derart exzentrisch zur Rollenachse gelagert, daß die ganze Kranflasche bis annähernd in eine Streckstellung zum Auslegerende hochgeschwenkt werden kann. Ein Umsetzen unter Last kommt dort jedoch ebensowenig in Betracht wie ein Hochschwenken des Kranhakens. Es wird lediglich ermöglicht, dadurch in niedrigen Räumen zu arbeiten, daß der Anschluß des Kranhakens etwas höher gelegt wird. Im übrigen dient auch dort das Hochschwenken vornehmlich einer erleichterten Halterung der Kranflasche beim Transport.

In weiterer Ausgestaltung der Erfindung können die Schwenkmittel zwischen Greifer und Ausleger einen vom Anschluß des Tragmittels in Richtung des Auslegers zurückversetzten Stützarm aufweisen, der eine erste Schwenkachse beim Einfahren des Greifers in seine Hub-Endstellung bestimmt. Beispielsweise wird das Schwenkmittel durch einen am inneren bzw. kranseitigen Ende des Greifers angebrachten Stützarm gebildet, dessen oberes Ende an der Unterseite des Auslegers zur Anlage kommt. Der Stützarm kann auch den Ausleger seitlich umgreifende Ausrichtenden aufweisen. Durch seine Anlage wird bei fortgesetzter Hubbewegung der Schwenkvorgang des Greifers wenigstens eingeleitet. Die Anlage kann bis in die Eingriffsstellung aufrechterhalten, aber auch vor Erreichen der Kupplungs-Endstellung gelöst sein.

Bei einer bevorzugten Ausführungsform der Erfindung weisen die Eingriffsmittel zwei in der Kupplungsstellung durch das außermittig angreifende Greifergewicht gegeneinander verspannte Gleitplatten auf, von welchen sich die Greifer-Gleitplatte vom Angriffspunkt des Tragmittels bis zum Stützarm erstreckt. Der Greifer wird also in der Greifermitte unmittelbar am Rand der Anlagefläche gegen diese gezogen und bringt durch sein Eigengewicht ein belastendes Schwenkmoment auf diese Fläche.

Dabei weist die Ausleger-Gleitplatte einen oberen Kupplungsteil und einen unteren, gegenüber dem Kupplungsteil vorzugsweise abgebogenen Führungsteil zum Führen der aufgleitenden Greifer-Gleitplatte beim Aufschwenken des Greifers auf. Die beiden zusammenwirkenden Gleitplatten bilden also schon eine Führung des Greifers, wenn dieser noch größeren Abstand von der Kupplungs-Endstellung hat. Sie können auch mit seitlichen Führungs- oder Zentrierelementen versehen sein, um ein weitgehend formschlüssiges Erfassen oder Umfassen des anderen Teiles zu gewährleisten.

So kann es zweckmäßig sein, den am kranseitigen Ende des Greifers angebrachten Stützarm mit einer Portalöffnung für den Eingriff des schmaleren Führungsteiles der Ausleger-Gleitplatte zu versehen.

Am Ausleger wird zweckmäßigerweise ein in der Kupplungs-Endstellung vom Greifer zu betätigender Tastschalter zum selbsttätigen Ausschalten des Hubwerkes angebracht.

Weiterhin kann vorteilhafterweise eine Riegelvorrichtung zum formschlüssigen Verriegeln des Greifers in der Kupplungsstellung am Ausleger vorgesehen sein. Es kann auch der Tastschalter durch die Riegelvorrichtung steuerbar sein, die sich nach Belieben etwa mittels Bowdenzug oder auch eines kraftbetätigten Stellorgans wieder lösen läßt.

Die Zeichnung gibt eine bevorzugte Ausführungsform der Erfindung beispielsweise wieder. Es zeigt

Fig. 1 eine Teil-Seitenansicht eines mittels eines flexiblen Tragmittels am freien Ende eines Kranauslegers aufgehängten Greifers mit einer erfindungsgemäßen Anschlußvorrichtung,

Fig. 2 eine Stirnansicht dieser Vorrichtung von rechts in Fig. 1 gesehen,

Fig. 3 eine der Fig. 2 entsprechende Stirnansicht beim ersten Anlagekontakt von Greifer und Ausleger,

Fig. 4 eine der Fig. 1 entsprechende Seitenansicht für die Hubstellung nach Fig. 3,

Fig. 5 eine Zwischenstellung beim Schwenkvorgang und

Fig. 6 die am Ende des Schwenkvorganges aus Fig. 4 erreichte Kupplungsstellung.

Nach der Zeichnung ist am freien Ende 1 eines Auslegers 2 ein Greifer 3 mittels eines oder mehrerer flexibler Tragmittel 4 angehängt. Durch eine nicht gezeigte Winde, das Hubwerk, kann das Tragmittel 4 eingeholt oder ausgelassen und dadurch der Greifer 3 lotrecht gehoben oder gesenkt werden. Nach der Darstellung läuft das Tragmittel 4 über eine am freien Auslegerende 1 angebrachte Rolle 5 zu einem auf der Oberseite des Greifer-Kopfstückes angebrachten Rollenkasten 7 mit zwei weiteren Umlenkrollen flaschenzugartig zurück zur Achse 9 der Rolle 5. Die an beiden Enden des Kopfstückes 6 angelenkten Greiferarme werden in bekannter und daher nicht weiter erläuterter Weise zwischen ihren Endstellungen verschwenkt.

Der hier als I-Profil ausgebildete Ausleger 2 kann grundsätzlich in beliebiger bekannter Weise gehalten und geführt, etwa an einer Drehlaufkatze starr, wippbar und/oder ausfahrbar angebracht sein. Er kann die gezeigte geradlinige Form haben oder auch regelmäßig oder unregelmäßig gekrümmt sein. Für den nachstehend geschilderten Kupplungsvorgang wird davon ausgegangen, daß der Ausleger etwa waagerecht gehalten ist, weil dabei der geringste Höhenbedarf erreicht wird, der oft das Umschalten wünschenswert macht.

Am Ausleger 2 ist fest eine Ausleger-Gleitplatte 8 mit einem ebenen oberen Kupplungsteil 81 und einem ebenen unteren Führungsteil 82 befestigt, die durch einen mittleren Krümmungsteil 83 verbunden und zueinander um ca. 45° geneigt sind. Dabei schließt der Kupplungsteil 81 mit einer Querebene des Auslegers 2 einen Winkel a von ca. 15° ein, während der Führungsteil 82 zum Ausleger um einen Winkel b von etwa 30° geneigt ist.

Eine Greifer-Gleitplatte 11 überdeckt den Rollenkasten 7 und erstreckt sich bis zu einem seitlich am Kopfstück 6 angeschweißten Stützarm 12, der dadurch über den Rollenkasten aussteifend mit dem Kopfstück verbunden ist.

Der Stützarm 12 hat die Form eines Portals mit zwei seitlichen Streben 13, deren Enden durch eine Kopfleiste 14 mit seitlichen, V-förmig geöffneten Ausrichtenden 15 verbunden sind. Die von den Teilen 13 und 14 umschlossene Portalöffnung 16 ist dabei um ca. 30% breiter als die Ausleger-Gleitplatte 8.

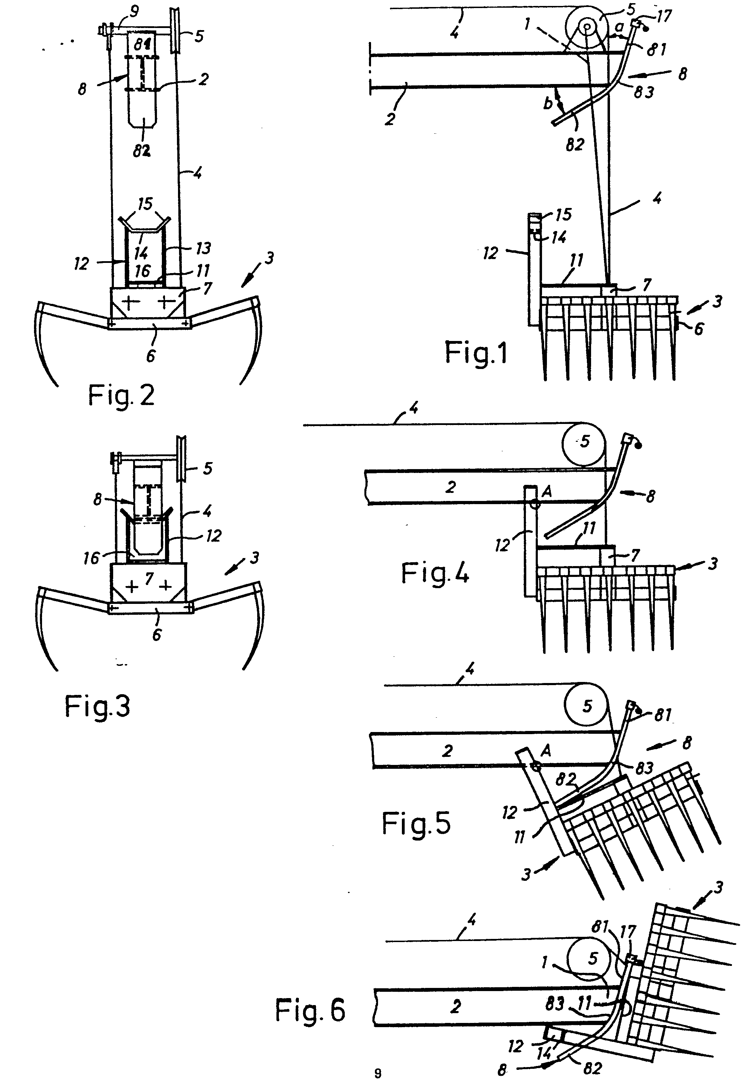

Normalerweise wird der Greifer in der Hängestellung nach den Fig. 1 und 2 betrieben. Wenn jedoch bis in eine Höhe dicht unter der Dachhaut und oberhalb des Betriebsbereiches des hängenden Greifers gearbeitet werden soll, kann der Greifer über die Zwischenstufen in den Fig. 4 und 5 bis in die Kupplungsstellung nach Fig. 6 aufgeschwenkt werden. Dabei kommt zunächst in der Position der Fig. 3 und 4 die Kopfleiste 14 des Stützarmes 12 an der Unterseite des Auslegers zur Anlage und bestimmt dadurch eine erste Schwenkachse A, um die der Greifer beim weiteren Einziehen des Tragmittels 4 entgegen dem Uhrzeigersinn schwenkt, bis in der Stellung Fig. 5 jeweils etwa die unteren Enden der Gleitplatten 8 und 11 aneinander zur Anlage kommen.

Dadurch wechselt zunächst die Momentanschwenkachse auf diese unteren Kontaktpunkte der Gleitplatten, während der Stützarm vom Ausleger abgehoben und nach unten geschwenkt wird. Beim weiteren Anziehen des Tragmittels gleitet dann die Greifer-Gleitplatte 11 · zunächst entlang dem Führungsteil 82 und über den Krümmungsteil 83 der Ausleger-Gleitplatte 8 unter ständiger weiterer Drehung und Verlagerung der augenblicklichen Schwenkachse bis in die Kupplungs-Endstellung nach Fig. 6, wobei sie am ebenen Kupplungsteil 81 zur Anlage kommt und mit ihrem oberen Rand den Tastschalter 17 betätigt. Dadurch wird die nicht gezeigte Winde des Tragmittels 4 abgeschaltet, und der Greifer wird durch die der Winde zugehörige Bremse gehalten. Dabei wird die Anlagekraft durch das Gewichtsmoment des Greifers 3 aufrechterhalten.

Jedenfalls dann, wenn das Hubwerk bzw. die Winde am Ausleger 2 selbst sitzt, ist die Haltekraft weitgehend unabhängig von der Neigungsstellung des Auslegers. Im übrigen kann durch Überlast- und Nachspannsteuerungen auch bei einer Änderung der Länge des Tragmittels von der Winde diese Länge stets der notwendigen Haltelänge angepaßt werden.

Grundsätzlich kann auch bei der gezeigten Ausführung noch eine zusätzliche Riegelvorrichtung angebracht sein, die sich mechanisch über Bowdenzug, elektrisch, hydraulisch oder elektro-hydraulisch steuern läßt. Es hat sich jedoch gezeigt, daß der hier erreichte Spiel-Eingriff des Führungsteiles 82 der Ausleger-Gleitplatte in die Portalöffnung 16 jedenfalls dann völlig hinreichende Führung gewährleistet, wenn der Greifer durch zwei seitliche Tragmittelstränge gehalten ist. Das freie Zungenende des Führungsteiles 82 ist mit Einführschrägen versehen, und das Seitenspiel zwischen der Ausleger-Gleitplatte 8 und den Seitenstreben 13 kann jedenfalls bis in die Endstellung nach Fig. 6 so verkleinert werden, daß ein praktisch formschlüssiger Eingriff oder gar eine leichte Verkeilung erzielt wird.

Wie auch immer die Befestigung im einzelnen gestaltet wird, der Greifer ist zumindest in lotrechter Ebene biegesteif an den Ausleger 2 angeschlossen und kann durch diesen unmittelbar geführt werden, was den angestrebten Effekt verbessert, bis dicht unter die Dachhaut einladen zu können.

## Patentansprüche

1. Verfahren zur Einlagerung von landwirtschaftlichem Gut wie Rauhfutter und Siliergut bis unter die Dachhaut eines landwirtschaftlichen Gebäudes unter Verwendung eines Greifer-Auslegerkrans mit am Auslegerende mittels eines flexiblen Tragmittels über größere Hubhöhe heb- und senkbar aufgehängtem Greifer, dadurch gekennzeichnet, daß der Greifer nach Aufnahme des Gutes mit diesem durch das Tragmittel bis zum Auslegerende angehoben, daraufhin bis wenigstens in eine angenährte Verlängerung des Auslegers hochgeschwenkt und mit diesem gekuppelt wird und daß dann das Gut mittels des nach Art eines Stielgreifers am Ausleger angekuppelten Greifers in die Einlageposition gebracht und dort abgesetzt wird.

2. Vorrichtung zur Einlagerung von landwirtschaftlichem Gut wie Rauhfutter und Siliergut bis unter die Dachhaut eines landwirtschaftlichen Gebäudes, mit einem Auslegerkran mit einem Auslegerende (1) geführten, an ein Hubwerk angeschlossenen flexiblen Tragmittel wie ein Hubseil (4), das einen Greifer (3) über eine größere Hubhöhe heb- und senkbar freipendelnd trägt, insbesondere zum Ausüben des Verfahrens nach Anspruch 1, gekennzeichnet durch an Greifer (3) und Auslegerende (1) vorgesehene und einander zugeordnete Schwenkmittel (Stützarm 12, Portalöffnung 16, Kopfleiste 14, Ausrichtenden 15), die beim Einfahren des Greifers (3) in dessen Hub-Endstellung am Auslegerende (1) zum Hochschwenken des Greifers (3) in der vertikalen Längsebene des Auslegers zum Eingriff kommen, und Eingriffsmittel (Portalöffnung 16, Gleitplatten 8, 11) zum selbsttätigen Führen in eine wenigstens angenäherte Verlängerung des Auslegers (2), sowie zum biegefesten Anschließen des Greifers (3) am Ausleger (2) bis zum Ablagern des Ladegutes aus erhöhter Stielgreiferstellung.

3. Vorrichtung nach Anspruch 2, dadurch gekennzeichnet, daß die Schwenkmittel (Stützarm 12) zwischen Greifer (3) und Ausleger (2) einen vom Anschluß des Tragmittels (4) in Richtung des Auslegers (2) zurückversetzten Stützarm (12) aufweisen, der eine erste Schwenkachse (A) beim Einfahren des Greifers (3) in seine Hub-Endstellung bestimmt.

4. Vorrichtung nach Anspruch 2, dadurch gekennzeichnet, daß das Schwenkmittel (Stützarm 12) durch einen am inneren bzw. kranseitigen Ende des Greifers angebrachten Stützarm (12) gebildet ist, dessen oberes Ende (Kopfleiste 14) an der Unterseite des Auslegers (2) zur Anlage kommt.

5. Vorrichtung nach Anspruch 4, dadurch gekennzeichnet, daß der Stützarm (12) den Ausleger (2) seitlich umgreifende Ausrichtenden (15) aufweist.

6. Vorrichtung nach einem der Ansprüche 3 bis 5, dadurch gekennzeichnet, daß die Eingriffsmittel (Portalöffnung 16, Gleitplatten 8, 11) zwei in der Kupplungsstellung durch das außermittig angreifende Greifergewicht gegeneinander verspannte Gleitplatten (8, 11) aufweisen, von welchen sich die Greifer-Gleitplatte (11) vom Angriffspunkt des Tragmittels (4) bis zum Stützarm (12) erstreckt.

7. Vorrichtung nach Anspruch 6, dadurch gekennzeichnet, daß die Ausleger-Gleitplatte (8) einen oberen Kupplungsteil (81) und einen unteren Führungsteil (82) zum Führen der aufgleitenden Greifer-Gleitplatte (11) beim Aufschwenken des Greifers (3) aufweist.

8. Vorrichtung nach Anspruch 7, dadurch gekennzeichnet, daß der Führungsteil (82) gegenüber dem Kupplungsteil (81) der Ausleger-Gleitplatte (8) abgebogen ist (83).

9. Vorrichtung nach Anspruch 4 und 7 oder 8, dadurch gekennzeichnet, daß der am kranseitigen Ende des Greifers (3) angebrachte Stützarm (12) eine Portalöffnung (16) für den Eingriff des schmaleren Führungsteils (82) der Ausleger-Gleitplatte (8) aufweist.

10. Vorrichtung nach einem der Ansprüche 2 bis 9, dadurch gekennzeichnet, daß am Ausleger (2) ein in der Kupplungs-Endstellung vom Greifer (3) zu betätigender Tastschalter (17) zum selbsttätigen Ausschalten des Hubwerkes angebracht ist.

11. Vorrichtung nach einem der Ansprüche 2 bis 10, gekennzeichnet durch eine Riegelvorrichtung zum formschlüssigen Verriegeln des Greifers (3) in der Kupplungsstellung am Ausleger (2).

12. Vorrichtung nach Anspruch 10 oder 11, dadurch gekennzeichnet, daß der Tastschalter (17) durch die Riegelvorrichtung steuerbar ist.

## Claims

1. A method of stacking farm crops such as fodder and material to be ensiled in a farm building as far as the roof thereof using a grab crane with a jib whose grab is able to be lifted and lowered through a considerable distance using the traction element of the crane, said element suspending the grab on the end of the jib, characterized in that after taking up the material the grab is moved upwards by the traction element as far as the end of the jib, is then swung with the material upwards at least as far as an approximate extension of the jib, is coupled with the jib and then material is put in the position at which it is to be stacked, by means of the grab fixed to the jib as sort of jib-mounted grab and is then deposited at the said position.

2. An apparatus for stacking farm crops such as fodder and material to be ensiled in a farm building as far as the roof thereof, comprising a jib crane with a flexible traction element such as a hauling rope (4) joined to a winch, said rope being trained over the end (1) of a jib and supporting a freely suspended grab (3) so that it may be lifted and lowered through a substantial distance, more specially for use in the method as claimed in claim 1, characterized by mating swivel means (supporting arm 12, door opening 16, head rail 14 and alinging means 15) on the grab (3) and on the end (1) of the jib, which when the grab (3) is moved into its top position an the end (1) of the jib, come into engagement for swinging the grab (3) upwards in the saggital plane of the jib and have engaging means (door opening 16 and sliding plates 8 and 11) for automatic guiding into a position which is at least roughly on an extension of the jib (2) and for joining the grab (3) stiffly on the jib (2) until the material lifted has been deposited from the grab, mounted on the jib, with the grab in an elevated position.

3. The apparatus as claimed in claim 2, characterized in that the swivel means (supporting arm 12) between the grab (3) and the jib (2) have a support arm (12) retracted from the connection of the traction element (4) in the direction of the jib, said supporting arm defining a first swivel axis (A) on moving the grab (3) into its topmost lifted position.

4. The apparatus as claimed in claim 2, characterized in that the swivel means (supporting arm 12) is formed by a supporting arm (12) mounted on the inner or crane end of the grab, and the top end (head rail 14) comes to rest against the lower side of the jib (2).

5. The apparatus as claimed in claim 4, characterized in that the supporting arm (12) has alinging means (15) fitting round the jib (2) at the side.

6. The apparatus as claimed in any one of claims 3 to 5, characterized in that the engagement means (door opening 16 and the sliding plates 8 and 11) have two sliding plates (8 and 11) clamped together by the one-sided force of the weight of the grab in the coupled position, the grab sliding plate (11) of the said plates extending from the point of action of the traction element (4) as far as the supporting arm (12).

7. The apparatus as claimed in claim 6, characterized in that the jib sliding plate (8) has an upper coupling part (81) and a lower guide part (82) for guiding the grab sliding plate (11) sliding thereon on swinging the grab (3) upwards.

8. The apparatus as claimed in claim 7, characterized in that the guide part (82) is bent down (83) in relation to the coupling part (81) of the jib sliding plate (8).

9. The apparatus as claimed in claim 4, claim 7, or claim 8, characterized in that the supporting arm (12) on the crane end of the grab (3) has a door opening (16) for the engagement of the narrower guide part (82) of the jib sliding plate (8).

10. The apparatus as claimed in any one of claims 2 to 9, characterized by a push button switch (17) on the jib (2), that is to be worked in the coupling end position of the grab (3), such button switch functioning to automatically switch of the winch.

11. The apparatus as claimed in any one of claims 2 to 10, characterized by a locking means for positively locking the grab (3) in the coupled position on the jib (2).

12. The apparatus as claimed in claim 10 or 11, characterized in that the push button switch (17) is worked by by the locking means.

**Revendications**

1. Procédé d'emmagasinage d'un produit agricole, notamment du fourrage brut ou d'ensilage, jusque sous la couverture d'un bâtiment agricole au moyen d'une grue équipée d'un flèche avec un grappin, le grappin étant suspendu à l'extrémité de la flèche par un organe flexible de levage permettant de la faire monter ou descendre avec une grande course verticale, caractérisé en ce que le grappin, après avoir saisi le produit, est soulevé par l'organe de levage jusqu'à l'extrémité de la flèche, puis pivote vers le haut jusqu'à une position située au moins approximativement dans le prolongement de la flèche et se trouve accouplé à celle-ci, et en ce que le produit est amené ensuite à son emplacement d'emmagasinage au moyen du grappin accouplé à la flèche comme au bout d'un bras, puis déposé à cet emplacement.

2. Dispositif pour l'emmagasinage d'un produit agricole, notamment du fourrage brut ou d'ensilage, jusque sous la couverture d'un bâtiment agricole, comportant une grue équipée d'une flèche et d'un organe flexible de levage, tel qu'un câble de levage (4), guidé à l'extrémité (1) de la flèche, raccordé à un treuil et portant un grappin (3) suspendu librement et agencé pour monter et descendre avec une grande course verticale, notamment pour la mise en oeuvre du procédé selon la revendication 1, caractérisé en ce qu'il comporte, disposés respectivement sur le grappin (3) et sur l'extrémité (1) de la flèche de manière à coopérer, des organes des pivotement (bras d'appui 12, ouverture 16, traverse 15, consoles d'alignement 15) qui, lorsque le grappin (3) a atteint la limite supérieure de sa course verticale, s'engagent contre l'extrémité (1) de la fleèche pour faire pivoter le grappin (3) dans le plan longitudinal vertical de la flèche, et des organes d'engagement (ouverture 16, plaques de glissement 8, 11) pour guider automatiquement le grappin (3) vers une position située au moins approximativement dans le prolongement de la flèche (2), ainsi que pour relier rigidement le grappin (3) à la flèche (2) jusqu'au dépôt du produit à partir d'une position surélevée du grappin.

3. Dispositif selon la revendication 2, caractérisé en ce que les organes de pivotement (bras d'appui 12), disposés entre le grappin (3) et la flèche (2), comportent un bras d'appui (12), qui est reculé en direction de la flèche (2) par rapport au point d'attache de l'organe de levage (4) et qui détermine un premier axe de pivotement (A) quand le grappin (3) a atteint la limite supérieure de sa course certicale.

4. Dispositif selon la revendication 2, caractérisé en ce que l'organe de pivotement (bras d'appui 12) est constitué par un bras d'appui (12) qui est disposé à l'extrémité intérieure du grappin, située du côté de la grue, et dont l'extrémité supérieure (traverse 14) vient en appui contre la face inférieure de la flèche (2).

5. Dispositif selon la revendication 4, caractérisé en ce que le bras d'appui (12) comporte des consoles d'alignement (15) s'engageant avec les côtés de la flèche (2).

6. Dispositif selon l'une quelconque des revendications 3 à 5, caractérisé en ce que les organes d'engagement (ouverture 16, plaques de glissement 8, 11) comportent deux plaques de glissement (8, 11) s'appliquant l'une contre l'autre dans leur position d'engagement sous l'effet extérieur du poids du grappin, la plaque de glissement (11) du grappin s'étendant du point d'attache de l'organe de levage (4) jusqu'au bras d'appui (12).

7. Dispositif selon la revendication 6, caractérisé en ce que la plaque de glissement (8) de la flèche comporte une partie supérieure de couplage (81) et une partie inférieure de guidage (82) pour guider la plaque de glissement (11) du grappin pendant le pivotement du grappin (3).

8. Dispositif selon la revendication 7, caractérisé en ce que la partie de guidage (82) de la plaque de glissement (8) de la flèche comporte une partie courbe (83).

9. Dispositif selon les revendications 4 et 7 ou 8, caractérisé en ce que le bras d'appui (12), disposé à l'extrémité du grappin (3) située du côté de la grue, comporte une ouverture (16) agencée pour s'engager sur la partie de guidage (82), plus étroite, de la plaque de glissement (8) de la flèche.

10. Dispositif selon l'une quelconque des revendications 2 à 9, caractérisé en ce que la flèche (2) est pourvue d'un interrupteur qui est actionné par le grappin (3) se trouvant en position extrême de couplage à la flèche, pour déclencher automatiquement le treuil.

11. Dispositif selon l'une quelconque des revendications 2 à 10, caractérisé en ce qu'il comporte un dispositif de verrouillage pour verrouiller par amboîtement le grappin dans sa position de couplage sur la flèche (2).

12. Dispositif selon la revendication 10 ou 11, caractérisé en ce que l'interrupteur est agencé pour être actionné par le dispositif de verrouillage.

0 061 047

Fig.1

Fig.2

Fig.3

Fig.4

Fig.5

Fig.6